# EUROPÄISCHE PATENTSCHRIFT

(11) **EP 0 587 833 B1**
(45) Veröffentlichungstag und Bekanntmachung des Hinweises auf die Patenterteilung: **01.07.1998**
(21) Anmeldenummer: 93905078.7
(22) Anmeldetag: 15.03.1993
(51) Int. Cl.: A61C 17/06, A61C 19/00, A61M 39/00, F16L 43/00

(54) **ROHRKNIE**
PIPE ELBOW
RACCORD COUDE

(30) Priorität: 02.04.1992 DE 9204544 U
(43) Veröffentlichungstag der Anmeldung: 23.03.1994
(73) Patentinhaber: Trawöger, Werner, 6173 Oberperfuss (AT); PREGENZER, Bruno, 6173 Oberperfuss (AT)
(72) Erfinder: Trawöger, Werner, 6173 Oberperfuss (AT); PREGENZER, Bruno, 6173 Oberperfuss (AT)
(74) Vertreter: Torggler, Paul, Dr.
(86) Internationale Anmeldenummer: AT9300046
(87) Internationale Veröffentlichungsnummer: WO9319695

(56) Entgegenhaltungen:
- EP-A- 370 997
- EP-A- 0 390 951
- WO-A-91/01771
- CH-A- 678 096
- DE-A- 3 409 954
- US-A- 4 181 330
- US-A- 4 289 129
- US-A- 5 016 923
- US-A- 5 027 809

## Beschreibung

Die Erfindung betrifft ein Rohrknie mit zwei in einem Winkel zueinander liegenden Rohrabschnitten und mit einer über Eck angeordneten Absperreinrichtung, die eine durch ein Druckmedium beaufschlagbare Membran aufweist, in deren Anpreßfläche beide Rohrabschnitte münden.

Ein derartiges sperrbares Rohrknie ist beispielsweise in der EP-A-505 885 beschrieben. Die beiden unter 90° zueinander ausgerichteten Rohrabschnitte sind im Eckbereich zueinander abgewinkelt, sodaß das in Offenstellung passierende Medium um 180° umgelenkt werden muß. Strömungstoträume mit funktionsstörenden Materialablagerungen sind daher nicht zu vermeiden.
Die Erfindung hat es sich nun zur Aufgabe gestellt, bei ein derartiges Rohrknie mit verbesserten Strömungsverhältnissen zu schaffen.
Erfindungsgemäß wird dies dadurch erreicht, daß beide Rohrabschnitte in die Anpreßfläche der Membran sich erweiternde Endbereiche aufweisen.

Aufgrund der etwa trichterartigen oder konischen Erweiterungen zur Anpreß- und Dichtfläche der Membran wird es möglich, den Durchtrittsquerschnitt auch im Membranbereich zumindest gleich dem der Rohrabschnitte zu halten, da der Kniebereich vergrößert ist. Insbesondere, wenn die Anpreßfläche im wesentlichen auf eine Übergangskante zwischen den beiden Rohrabschnitten beschränkt ist, bestehen keine strömungstoten Flächen, an denen die Membrananpressung behindernde Materialablagerungen auftreten können. In der Anpreßfläche liegen dadurch nur der Klemmrand der Membran und die Trennlinie zwischen den beiden Rohrabschnitten bzw. den Trichterflächen der beiden Endbereiche.

Nachstehend wird nun die Erfindung anhand der Figuren der beiliegenden Zeichnungen näher beschrieben, ohne darauf beschränkt zu sein.

### Es zeigen:

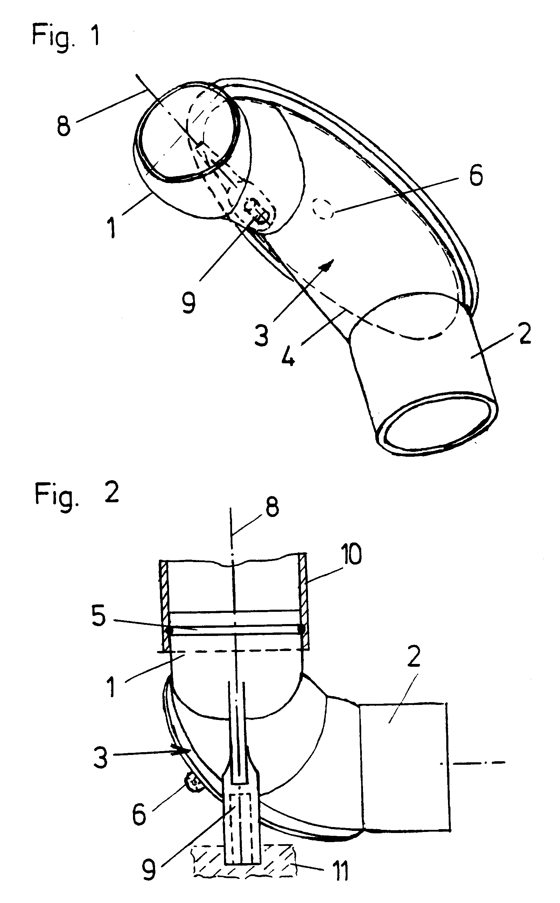

- Fig. 1: eine bevorzugte Ausführung des erfindungsgemäßen Rohrknies in einer Schrägansicht auf die Knieinnenseite,
- Fig. 2: eine Draufsicht auf das Rohrknie senkrecht zur Drehachse und
- Fig. 3: eine um etwa 90° verdrehte Schrägansicht der Ausführung nach Fig. 1 mit geöffneter Ventilkammer.

Ein Rohrknie weist zwei Rohrabschnitte 1, 2 auf. Von diesen ist der Rohrabschnitt 1 zum Anschluß an eine Muffe 10 eines Anschlußblockes vorgesehen, der mit einer Halterung 11 verbunden ist. In der Verwendung als Rohrknie für den Anschluß eines zahnärztlichen Saugschlauches ist der Anschlußblock an einer Schlauchablageeinheit vorgesehen, wobei bevorzugt zwei Saugschläuche über zwei erfindungsgemäße Rohrknie um eine gemeinsame Achse drehbar von entgegengesetzten Seiten in den Anschlußblock eingesetzt sind.

In der Drehachse 8 des ersten Rohrabschnittes 1 liegt weiters ein Lagerzapfen 9, der von der der Öffnung des Rohrabschnittes 1 gegenüberliegenden Wand absteht und an oder in der Halterung 11 drehbar gelagert ist. Das Rohrknie weist dadurch einen zweiten Lagerbereich auf, der die Steckverbindung und Dichtung 5 zwischen dem Rohrabschnitt 1 und der Muffe 10 schont. Das Rohrknie weist weiters eine Ventilkammer 3 auf, die schräg zu beiden Rohrabschnitten 1, 2 liegt und durch eine Membran 4 als Absperreinrichtung begrenzt ist.

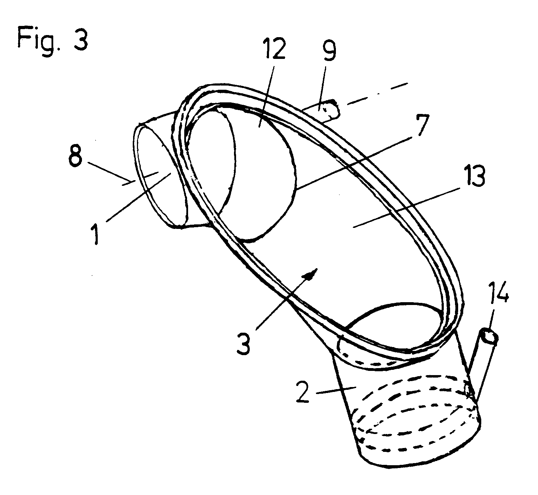

Fig. 3 zeigt das Rohrknie mit geöffneter Ventilkammer 3. Die Endbereiche 12, 13 der Rohrabschnitte 1,2 erweitern sich trichterartig bzw. etwa konisch zur Anpreßfläche 7 hin, die dadurch nur einen schmalen, konkaven Übergangssteg zwischen den beiden Rohrabschnitten 1,2 bildet. Somit sind Flächen vermieden, an denen die dichtende Anlage der hier nicht gezeigten Membran behindernde Ablagerungen auftreten können. Weiters ist der Querschnitt des Rohrknies auch im Bereich der Membran nicht verengt, da das Rohrknie durch die Erweiterungen der Rohrabschnitte an der Knieinnenseite ausgebaucht ist. Die Ventilkammer 3 ist beispielsweise durch einen nicht gezeigten Deckel verschlossen, der eingeklebt, eingeschweißt oder eingerastet ist und die Membran 4 klemmt.

Für die Einbringung des Druckmediums ist ein Anschlußstutzen 6 vorgesehen, der insbesondere am Deckel ausgebildet ist. Herrscht in der Ventilkammer 3 ein höherer Druck als in den Rohrabschnitten 1, 2, so ist die Membran 4 an die Anpreßfläche 7 angepreßt und der Durchgang durch das Rohrknie gesperrt. Ist hingegen der Druck geringer, so ist die Membran von der Anpreßfläche 7 angehoben und der Durchgang offen. Da der Deckel der Ventilkammer 3 an der Knieaußenseite liegt, könnte auch der Anschlußstutzen 6 als Lagerzapfen 9 dienen, wobei das Rohrknie dann einen einfachen Bogen bildet. In der gezeigten Ausführung ist der Rohrabschnitt 1 um etwa 45° gebogen, sodaß der Lagerzapfen 9 die Ventilkammer 3 seitlich passiert. Weiters könnte der Lagerzapfen 9 auch einen Abzweig- oder Zufuhrkanal bilden.

Ein zahnärztlicher Saugschlauch kann gegebenenfalls auch eine zusätzliche Leitung, etwa einen Zweitschlauch geringeren Durchmessers enthalten. Die Steckkupplung am Saugschlauch umfaßt dann Zwei Dichtungsringe und eine dazwischen verlaufende Umfangsnut, in der der Zweitschlauch endet. Ein für den Anschluß eines derartigen Saugschlauches geeignetes Rohrknie weist einen Rohrabschnitt 2 auf, der in dem bei angeschlossenem Saugschlauch mit der Umfangsnut korrespondierenden Bereich einen weiteren Anschlußstutzen 14 aufweist.

Der Anschlußstutzen 14 kann, wenn auch der Lagerzapfen 9 einen Kanal bildet, mit diesem durch einen Schlauch od.dgl.verbunden sein, der im Rohrabschnitt 1 wiederum in eine Umfangsnut mündet. Auf diese Weise kann die zusätzliche Leitung die Absperreinrichtung extern umgehen.

## Patentansprüche

1. Rohrknie mit zwei in einem Winkel zueinander liegenden Rohrabschnitten (1,2) und mit einer über Eck angeordneten Absperreinrichtung, die eine durch ein Druckmedium beaufschlagbare Membran (4) aufweist, in deren Anpreßfläche (7) beide Rohrabschnitte (1, 2) münden, dadurch gekennzeichnet, daß beide Rohrabschnitte (1,2) in die Anpreßfläche (7) der Membran (4) sich erweiternde Endbereiche (12,13) aufweisen.

2. Rohrknie nach Anspruch 1, dadurch gekennzeichnet, daß die Anpreßfläche (7) im wesentlichen auf eine Übergangskante zwischen den beiden Rohrabschnitten (1, 2) beschränkt ist.

## Claims

1. A pipe elbow comprising two pipe portions (1, 2) which are disposed at an angle to each other, and a shut-off device arranged diagonally opposite and having a diaphragm (4) which can be acted upon by a pressure medium and at the pressure surface (7) of which the two pipe portions (1, 2) open, characterised in that the two pipe portions (1, 2) have end regions (12, 13) which widen into the pressure surface (7) of the diaphragm (4).

2. A pipe elbow according to claim 1 characterised in that the pressure surface (7) is substantially restricted to a transitional edge between the two pipe portions (1, 2).

## Revendications

1. Raccord coudé comprenant deux sections de tube (1, 2) definissant un angle, et un dispositif de fermeture disposé dans le coin et comportant une membrane (4) qui est apte à être sollicitée par un agent de pression et dans la surface de pression (7) de laquelle débouchent les deux sections de tube (1, 2), caractérisé en ce que les deux sections de tube (1) présentent des zones d'extrémité (12, 13) qui s'élargissent jusque dans la surface de pression (7) de la membrane (4).

2. Raccord coudé selon la revendication 1, caractérisé en ce que la surface de pression (7) est limitée essentiellement à un bord de transition entre les deux sections de tube (1, 2).
